# EUROPÄISCHE PATENTSCHRIFT

(11) **EP 2 839 182 B1**
(45) Veröffentlichungstag und Bekanntmachung des Hinweises auf die Patenterteilung: **31.10.2018**
(21) Anmeldenummer: 13715690.7
(22) Anmeldetag: 11.04.2013
(51) Int. Cl.: F16G 13/16

(54) **ENERGIEFÜHRUNGSKETTE MIT ROLLEN**
DRAG CHAIN WITH ROLLERS
CHAÎNE D'ACHEMINEMENT D'ÉNERGIE MUNIE DE GALETS

(30) Priorität: 19.04.2012 DE 202012003908 U
(43) Veröffentlichungstag der Anmeldung: 25.02.2015
(73) Patentinhaber: Igus GmbH, 51147 Köln (DE)
(72) Erfinder: JAEKER, Thilo, Alexander, 53757 Sankt Augustin (DE)
(74) Vertreter: Lippert Stachow Patentanwälte Rechtsanwälte
(86) Internationale Anmeldenummer: PCT/EP2013/057594
(87) Internationale Veröffentlichungsnummer: WO 2013/156388

(56) Entgegenhaltungen:
- WO-A1-99/57457
- DE-A1-102006 029 529
- DE-U1-202011 004 762
- GB-A- 1 444 307
- JP-A- 2001 221 293
- US-A1- 2005 040 275

## Beschreibung

Die Erfindung betrifft eine Energieführungskette nach dem Oberbegriff des Hauptanspruchs.

Solche Energieführungsketten werden verwendet, um einen gegenüber einer ortsfesten Anschlussstelle beweglichen Verbraucher mit Energieträgern, wie Elektrizität, Wasser, Gas und dergleichen zu versorgen und/oder Signale zu übertragen. Sie sind aus einer Anzahl von gegeneinander verschwenkbaren Kettengliedern zusammengesetzt, die aus zwei einander gegenüberliegenden Seitenlaschen und diese verbindenden Querstegen aufgebaut sind und in dem dadurch begrenzten Raum Kabel, Schläuche und dergleichen aufnehmen können. Der Raum kann durch Trennstege zwischen den Querstegen weiter unterteilt sein. Zur Anpassung an den bei der Bewegung des Verbrauchers sich ändernden Abstand zur Anschlussstelle bildet die Energieführungskette eine Schlaufe, die ein Obertrum, ein Untertrum und einen Umlenkbereich mit einem durch Begrenzung des Schwenkwinkels zwischen benachbarten Laschen vorgegebenen Krümmungsradius aufweist. Dabei kann das Obertrum mindestens teilweise auf dem Untertrum ruhen und bei der Bewegung des Verbrauchers darauf gleiten. Je nach den räumlichen Gegebenheiten, der Länge der Kette, dem Gewicht und den Eigenschaften der von der Kette aufgenommenen Versorgungsleitungen usw. können die erforderlichen Krümmungsradien im Umlenkbereich unterschiedlich sein. Um ein seitliches Ausbrechen der Kette zu verhindern, können Führungsschienen vorhanden sein.

Eine allgemeine Aufgabe bei der Gestaltung solcher Energieführungsketten besteht darin, dass die Bewegung des Obertrums auf dem Untertrum möglichst sicher, Energie sparend und geräuscharm erfolgen kann. Hierzu werden die zum Inneren der Schlaufe weisenden Flächen der Kettenglieder möglichst glatt ausgeführt und können zusätzlich mit Laufrollen versehen werden.

Eine allgemeine Darstellung einer solchen Energieführungskette ist in der WO 99/57457 A1 enthalten.

Unter der Bezeichnung E2/000 E-Kette® wird von der Anmelderin eine Energieführungskette vertrieben, bei der die Kettenglieder aus einem einstückigen Unterteil, welches die beiden Seitenlaschen und die zum Inneren der Schlaufe weisenden inneren Querstege umfasst, und lösbar bzw. schwenkbar an den zur Außenseite der Schlaufe weisenden Schmalseiten der Seitenlaschen befestigten äußeren Querstege zusammengesetzt sind. Die Seitenlaschen sind dabei so gekröpft ausgeführt, dass sie an einem Ende die Außenseite des Kettenglieds und am anderen Ende die Innenseite des Kettenglieds bilden. Beim Verfahren dieser Kette gleiten also die einstückig mit den Seitenlaschen ausgebildeten inneren Querstege aufeinander. Wegen der damit verbundenen Reibung ist die Länge des Gleitbereichs aber beschränkt, und diese Kette eignet sich nicht für lange Verfahrwege.

Um das Verfahren der Kette noch leichter, geräuscharmer und Energie sparender und über längere Wege ausführen zu können, erscheinen die von anderen Energieführungskette bekannten in die Seitenlaschen eingelassen Laufrollen geeignet. Dadurch würde jedoch die Herstellung der Unterteile aufwändiger und es erscheint nicht wirtschaftlich, die erforderliche Vielfalt der einstückigen Unterteile nach Höhe und Breite herzustellen und am Lager zu halten.

DE 10 2006 029529 A1 beschreibt eine gattungsgemäße Energieführungskette, bei der die Kettenglieder auf der Innenseite der Schleife mit Schuhen versehen ist, die aufeinander gleiten können und jeweils einen Indikator zur Anzeige des Verschleißes aufweisen. Dadurch wird Verschleiß und Geräuschbildung vermindert.

Eine in einer Führungsschiene laufende Energieführungskette ist in US 2005/040275 A1 beschrieben. Ihre Glieder weisen auf der Innenseite der Schleife Laufrollen auf, die auf dem Untertrum durch die Führungsschiene nach innen und auf dem Obertrum durch Federn nach außen gedrückt werden, damit sie beim Verfahren aneinander vorbei laufen können. Dies soll ebenfalls der Geräusch- und Verschleißminderung dienen.

JP 2001 221293 A offenbart eine Energieführungskette, deren Glieder mit Blattscharnieren untereinander verbunden sind und bei der das Obertrum mithilfe von Laufrollen auf einem Gestell verfahren wird. Dies vermeidet das Durchhängen der Kette und die übermäßige Belastung der Scharniere.

Aufgabe der Erfindung ist es daher, die bekannte Energieführungskette so fortzubilden, dass sie leichter und über längere Wege verfahrbar und dabei in einer Vielfalt von Abmessungen wirtschaftlich herstellbar ist.

Diese Aufgabe wird durch eine Energieführungskette nach dem Hauptanspruch gelöst.

Die Kettenglieder der erfindungsgemäßen Energieführungskette umfassen nun also zwei Seitenlaschen, in die Laufrollen eingelassen sind, eine Anzahl innere Querstege, die an der Innenseite der Seitenlaschen fest mit diesen verbunden sind und eine Anzahl äußerer Querstege, die zumindest an einem Ende zum Öffnen der Kettenglieder von der Seitenlaschen lösbar und gegebenenfalls schwenkbar sind. Bevorzugt sind jeweils zwei innere und äußere Querstege vorhanden.

Weil die Schmalseiten der Seitenlaschen durch die Befestigung der inneren Querstege nicht gestört werden, können sie im gestreckten Zustand der Kette eine zusammenhängende Lauffläche bilden, welche die Laufrollen des gegenüberliegenden Trums leicht abrollen lässt. Gewöhnlich ist es für die Funktion der Laufrollen ausreichen, wenn sie um etwa 0,5 bis 2 mm aus der Lauffläche hervorragen.

Die Befestigung der inneren Querstege erfolgt durch eine elastische formschlüssige Rastverbindung, die allenfalls mit einem speziellen Werkzeug lösbar ist. Hierzu können beispielsweise die Querstege mit Fortsätzen versehen sein, die Rastnocken aufweisen, welche beim Einführen in dafür vorgesehene hinterschnittene Ausnehmungen in den Innenflächen der Seitenlaschen einrasten. Nötigenfalls kann diese Verbindung mit einem Werkzeug durch eine Öffnung der Ausnehmung zur Außenseite der Seitenlaschen gelöst werden.

Im Gegensatz zu den inneren Querstegen sind die äußeren Querstege nicht fest mit den Seitenlaschen verbunden, sondern sind beweglich und lösbar, so dass sie an einem Ende gelöst und um das andere Ende geschwenkt werden können, um das Kettenglied öffnen zu können. Eine geeignete Befestigung ist in DE 199 19 076 A1 beschrieben. Dabei ist der Quersteg an den Enden mit Ansätzen versehen, welche Lagerzapfen aufweisen, die in Öffnungen in der Schmalseite der Seitenlaschen eingeführt werden und dort von einer Schnappnase elastisch gehalten werden. Durch elastisches Wegdrücken der Schnappnase kann der Lagerzapfen und damit der Quersteg freigegeben werden.

Besonders vorteilhaft ist es, dass Querstege dieser Art auch für die feste Verbindung mit der Seitenlasche verwendbar sind. Wenn man diese nämlich mit den Ansätzen in die oben beschriebenen hinterschnittenen Ausnehmungen auf der Innenseite der Seitenlaschen einführt, rastet der Lagerzapfen in den Hinterschnitt ein und kann nicht mehr gelöst werden. Man kann also dasselbe Bauteil sowohl als Inneren als auch als äußeren Quersteg verwenden.

Die erfindungsgemäße Energieführungskette benötigt nun für unterschiedliche Breiten nur eine Art Seitenlaschen. Die Querstege sind einfach in unterschiedlichen Längen herstellbar, um unterschiedliche Breiten der Kettenglieder realisieren zu können.

In einer bevorzugten Ausführungsform sind die Seitenlaschen so ausgeführt, dass sie an einem Ende eine Schwenkhülse zur Aufnahme des Schwenkzapfens der benachbarten Seitenlasche und am anderen Ende einen Schwenkzapfen zum Einführen in die Schwenkhülse der an diesem Ende benachbarten Seitenlaschen aufweisen. Sie sind dabei vorteilhaft gekröpft, so dass das Ende mit der Schwenkhülse jeweils zur Außenseite des Kettenglieds und das Ende mit dem Schwenkzapfen jeweils zur Innenseite des Kettenglieds weist, oder umgekehrt. So benötigt man für Energieführungskette unterschiedlicher Breite für beide Seitenlaschenstränge nur noch eine Art Seitenlaschen. Es kann jedoch vorteilhaft sein, beide Seitenstränge mit jeweils spiegelbildlich gestalteten Seitenlaschen zu versehen.

In einer anderen Ausführungsform sind die Seitenlaschenstränge aus abwechselnden Seitenlaschen zusammengestellt, die jeweils zur Innen- bzw. zur Außenseite des Kettengliedes gerichtet sind. Dabei können beispielsweise die Innenlaschen zwei Schwenkzapfen und die Außenlaschen zwei Schwenkhülsen aufweisen. Es ist auch möglich, sowohl die Außenlaschen als auch die Innenlaschen mit einer Schwenkhülse und einem Schwenkzapfen zu versehen. Wenn die Anforderungen an die Energieführungskette es gestatten, kann man vorteilhaft nur die Außenlaschen mit Laufrollen versehen, wodurch die Herstellung und Lagerung der Innenlaschen kostengünstiger wird.

Die Erfindung lässt sich auch ausführen, indem nicht alle Seitenlaschen mit Laufrollen versehen sind. Kettenglieder mit den erfindungsgemäßen Merkmalen können ohne weiteres mit Kettengliedern zusammengefügt werden, welche keine Rollen aufweisen.

Um den Schwenkwinkel zwischen benachbarten Seitenlaschen zu begrenzen und so einen einheitlichen Krümmungsradius im Umlenkbereich zu ermöglichen, weisen die Seitenlaschen Anschläge auf, die mit einem Widerlager auf der benachbarten Seitenlaschen zusammenwirken können.

Die Erfindung wird nun anhand der beigegebenen Zeichnungen näher erläutert. Es zeigen:
- Figur 1: ein Kettenglied nach der Erfindung in Schrägansicht, teilweise demontiert,
- Figur 2: eine Seitenansicht eines Teils einer Kette mit einem erfindungsgemäßen Kettenglied,
- Figur 3: vier Schnitte durch das in Figur 2 gezeigte Kettenteil,
- Figur 4: eine Schrägansicht des in Figur 2 gezeigten Ketten teils.

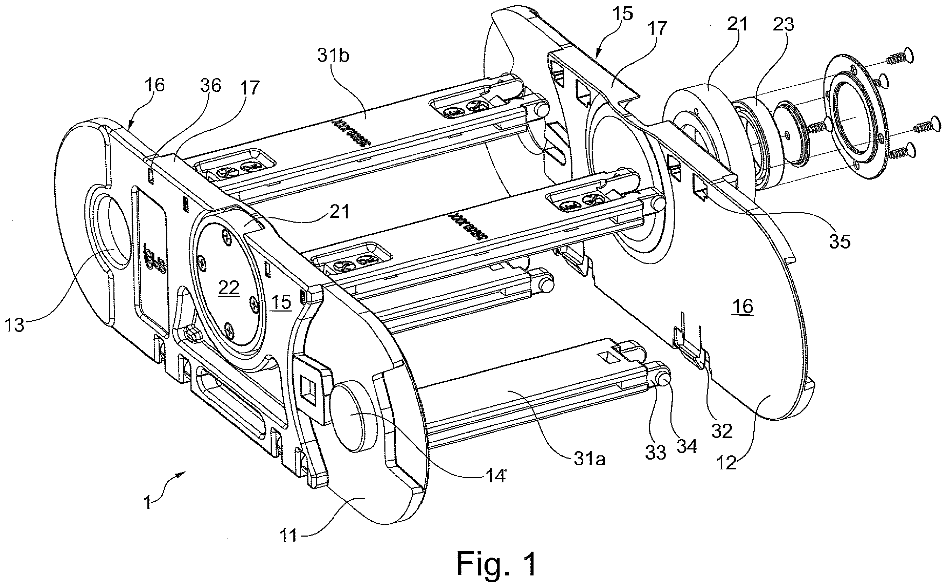

Figur 1 zeigt ein Kettenglied 1 mit den erfindungsgemäßen Merkmalen in Schrägansicht. Es besteht aus zwei Seitenlaschen 11, 12, die zueinander spiegelbildlich sind und jeweils eine Schwenkhülsen 13 und einen Schwenkzapfen 14 aufweisen, die bei der Montage zur schwenkbaren Verbindung mit dem benachbarten Kettenglied dienen. An dem Ende mit der Schwenkhülse 13 bildet die Seitenlasche 11 die Außenfläche 15 des Kettenglied 1, während an dem Ende mit dem Schwenkzapfen 14 die Innenfläche 16 der Seitenlasche 11 freiliegt.

In den Seitenlaschen 11, 12 sind Laufrollen 21 eingelassen. Diese sind auf einem nicht sichtbaren Drehzapfen 24 mittels des Kugellagers 23 gelagert und durch die mit Schrauben befestigte Abdeckung 22 geschützt. Die Schmalseiten 17 der Seitenlaschen 11, 12 bilden im gestreckten Zustand der Kette eine durchgehende Lauffläche, auf der die Laufrollen 21 abrollen können.

Zwischen den Seitenlaschen sind Querstege 31 angeordnet und zwar in diesem Fall je zwei innere Querstege 31i nahe der Lauffläche 17 und zwei äußere Querstege 31a. Die Querstege weisen an den Enden Ansätze 33 mit Lagerzapfen 34 auf. Die Lagerzapfen können durch Öffnungen in der äußeren Schmalseite der Seitenlaschen hinter die Schnappnase 32 gedrückt werden. Dabei bleiben Sie um die Lagerzapfen schwenkbar, soweit das andere Ende frei ist. Die inneren Querstege können dagegen mit den Ansätzen und Lagerzapfen unter elastischer Verformung in die hinterschnittenen Ausnehmungen 35 eingeführt werden, wobei die Lagerzapfen in den Hinterschnitt einrasten. Diese Verbindung kann nur durch Einführen eines geeigneten Werkzeugs in die nach außen führende Öffnung 36 der Ausnehmung 35 gelöst werden.

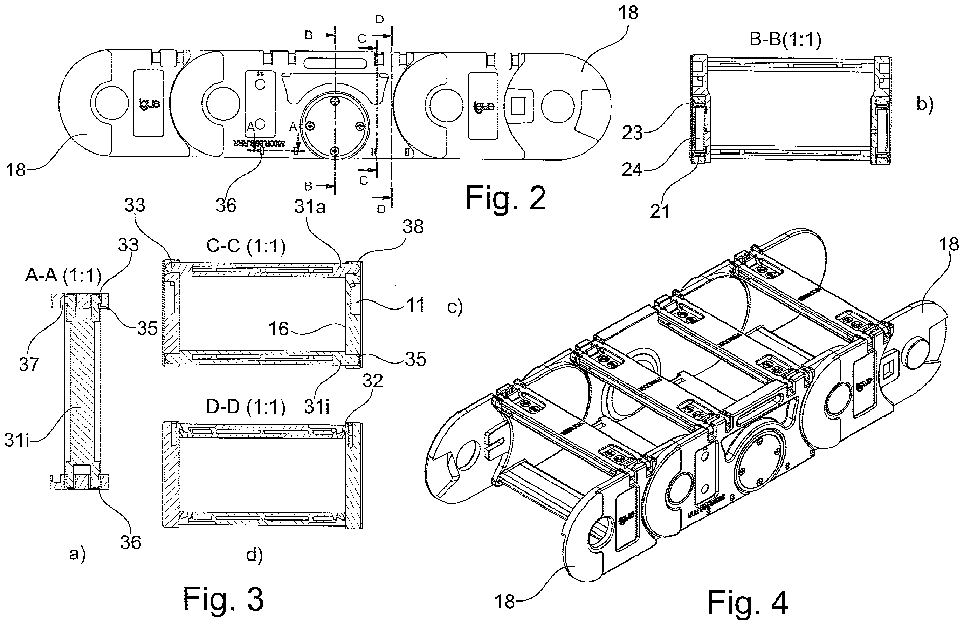

Figur 2 zeigt ein erfindungsgemäßes Kettenglied innerhalb einer Energieführungskette, die in diesem Fall durch kürzere Kettenglieder ohne Laufrollen ergänzt ist, in Seitenansicht. Diese Figur zeigt vor allem die vier in Figur 3 gezeigten und näher erläuterten Schnitte.

Figur 3a) zeigt einem Schnitt durch die Befestigung eines inneren Querstegs 31i. Hierbei ist der Einsatz 33 mit dem Lagerzapfen bereits in die Ausnehmung 35 eingeführt. Der Lagerzapfen am Ansatz 33 ist hinter dem Hinterschnitt 37 festgelegt. Durch Einführen eines Werkzeugs in die Öffnung 36 kann der Ansatz 33 beiseite gedrückt und der Lagerzapfen freigegeben werden.

Figur 3b) zeigt einem Schnitt quer zur Energieführungskette durch den Drehpunkt der Laufrollen 21. Diese sind mittels des Kugellagers 23 auf dem Drehzapfen 24 gelagert.

Figur 3c) zeigt einen Schnitt durch den Ansatz 33 an den äußeren Querstegen 31a im montierten Zustand. Die Ansätze 33 des Quersteges 31a sind in die Öffnung 38 von der Schmalseite der Seitenlasche her eingeführt, während die Ansätze des inneren Querstege 31i von der Innenseite 16 der Seitenlaschen her in die Ausnehmung 35 eingeführt sind.

Figur 3d) stellt einen weiteren Schnitt dar, der die Schnappnase 32 zeigt, die im montierten Zustand den Lagerzapfen 34 am Ansatz 33 des äußeren Quersteges 31a hält.

Figur 4 stellt dar, wie ein Kettenglied mit den erfindungsgemäßen Merkmalen in eine Energieführungskette eingegliedert und mit weiteren Seitenlaschen, die keine Laufrollen aufweisen, verbunden werden kann.

### Energieführungskette mit Rollen

### Bezugszeichenliste

- 1: Kettenglied
- 11: linke Seitenlasche
- 12: rechte Seitenlasche
- 13: Schwenkhülse
- 14: Schwenkzapfen
- 15: Außenfläche
- 16: Innenfläche
- 17: Schmalseite, Lauffläche
- 18: weitere Seitenlaschen
- 21: Laufrolle
- 22: Abdeckung
- 23: Kugellager
- 24: Drehzapfen
- 31i: innerer Quersteg
- 31a: äußerer Quersteg
- 32: Schnappnase
- 33: Ansatz
- 34: Lagerzapfen
- 35: hinterschnittene Ausnehmung
- 36: Öffnung nach außen
- 37: Hinterschnitt
- 38: Öffnung in der Schmalseite

## Patentansprüche

1. Energieführungskette (1) zur Führung von Schläuchen, Kabeln und dergleichen mit einer Anzahl gelenkig miteinander verbundener Kettenglieder, die durch zueinander parallele, zu parallelen Seitenlaschensträngen verbundene Seitenlaschen (11, 12) und diese verbindende Querstege (31) gebildet werden, wobei die Seitenlaschen (11, 12) um eine je zwei benachbarten Seitenlaschen gemeinsame Schwenkachse gegeneinander schwenkbar sind, wobei die Energieführungskette so verfahrbar ist, dass sie eine Schlaufe mit einem Obertrum, einem Untertrum und einem diese verbindenden Umlenkbereich bildet, wodurch an den Kettengliedern bezüglich der Schlaufe eine Innenseite und eine Außenseite definiert wird, wobei das Obertrum auf dem Untertrum unter zumindest teilweiser Berührung der Innenseiten von Kettengliedern aufliegt, wobei in zumindest einigen Seitenlaschen (11, 12) Laufrollen (21) eingelassen sind, die aus der Schmalseite (17) der Seitenlaschen hervorragen und beim Verfahren der Kette auf den Schmalseiten der Seitenlaschen des gegenüberliegenden Trums abrollen können, **dadurch gekennzeichnet, dass** die Querstege (31) auf der Außenseite der Kettenglieder nicht fest mit den Seitenlaschen verbunden sondern beweglich und lösbar sind, so dass sie zumindest an einem Ende von der Seitenlasche (11, 12) gelöst und zum Öffnen des Kettenglieds geschwenkt werden können, während die Querstege (31) auf der Innenseite der Kettenglieder fest mit den Seitenlaschen verbunden sind, wobei die feste Verbindung der Querstege auf den zum Inneren des Kettengliedes weisenden Flächen (16) der Seitenlaschen (11, 12) hergestellt ist, wobei die feste Verbindung eine Rastverbindung ist, die nur mit einem Werkzeug durch eine Öffnung (36) einer Ausnehmung in der Außenseite der Seitenlasche lösbar ist.

2. Energieführungskette nach Anspruch 1, **dadurch gekennzeichnet, dass** die Seitenlaschen (11, 12) so ausgeführt sind, dass sie an einem Ende eine Schwenkhülse (13) zur Aufnahme des Schwenkzapfens (14) der benachbarten Seitenlasche und am anderen Ende einen Schwenkzapfen (14) zum Einführen in die Schwenkhülse (13) der an diesem Ende benachbarten Seitenlasche aufweisen.

3. Energieführungskette nach Anspruch 2, **dadurch gekennzeichnet, dass** die Seitenlaschen (11, 12) so gekröpft sind, dass das Ende mit der Schwenkhülse (13) jeweils zur Außenseite des Kettenglieds und das Ende mit dem Schwenkzapfen (14) jeweils zur Innenseite des Kettenglieds weist, oder umgekehrt.

4. Energieführungskette nach Anspruch 1, **dadurch gekennzeichnet, dass** in den Seitenlaschensträngen abwechselnd zum Inneren und zum Äußeren des Kettenglieds weisende Seitenlaschen (11, 12) angeordnet sind.

5. Energieführungskette nach Anspruch 4, **dadurch gekennzeichnet, dass** nur die nach außen weisenden Seitenlaschen mit Laufrollen (21) versehen sind.

6. Energieführungskette nach einem der vorangehenden Ansprüche, **dadurch gekennzeichnet, dass** der Schwenkwinkel zwischen benachbarten Seitenlaschen durch Anschläge und Widerlager beschränkt ist.

## Claims

1. Energy guiding chain, for guiding hoses, cables and the like, with a number of chain links (1) connected to each other in articulated fashion, said links being formed by side straps (11, 12), which are parallel to each other and connected to form parallel side strap strands, and cross-members (31) connecting them, where the side straps can be pivoted relative to each other about a pivoting axis common to two adjacent side straps, where the energy guiding chain can be traversed in such a way that it forms a loop having an upper strand, a lower strand and a deflection zone connecting them, as a result of which an inner side and an outer side in relation to the loop is defined on the chain links, where the upper strand rests on the lower strand, this involving at least partial contact of the inner sides of chain links, where rollers (21) are recessed into at least some side straps (11, 12), said rollers projecting from the narrow face (17) of the side straps and being able to roll on the narrow faces of the side straps of the opposite strand during traversing of the chain, **characterised in that** the cross-members (31) on the outer side of the chain links are not permanently connected to the side straps but are movable and detachable, such that they can be detached at least at one end from the side strap (11, 12) and pivoted in order to open the chain link, while the cross-members (31) on the inner side of the chain links are permanently connected to the side straps, while the permanent connection of the cross-members is made on the surfaces (16) of the side straps (11, 12) facing towards the inside of the chain link, and whereas the permanent connection is a snap-in connection that can only be released with a tool through an opening (36) of a recess leading to the outer side of the side strap.

2. Energy guiding chain according to Claim 1, **characterised in that** the side straps (11, 12) are designed in such a way that one of their ends displays a pivoting sleeve (13) to accommodate the pivoting journal (14) of the adjacent side strap, the other end displaying a pivoting journal (14) for inserting into the pivoting sleeve (13) of the side strap adjacent to this end.

3. Energy guiding chain according to Claim 2, **characterised in that** the side straps (11, 12) are cranked, such that the end with the pivoting sleeve (13) points towards the outer side of the chain link and the end with the pivoting journal (14) points towards the inner side of the chain link, or vice versa.

4. Energy guiding chain according to Claim 1, **characterised in that** the side strap strands consist of side straps (11, 12) arranged to face alternately towards the inside and the outside of the chain link.

5. Energy guiding chain according to Claim 4, **charac- terised in that** only the side straps facing outwards are provided with rollers (21).

6. Energy guiding chain according to one of the preceding Claims, **characterised in that** the pivoting angle between adjacent slide straps is limited by mechanical stops and abutments.

## Revendications

1. Chaîne de transmission d'énergie (1) pour le passage de tuyaux, de câbles et similaires, avec un certain nombre de maillons articulés entre eux, qui sont formés par des flasques latéraux (11, 12) parallèles les uns aux autres, reliés pour former des brins de flasques latéraux parallèles, et d'entretoises (21) reliant ceux-ci, les flasques latéraux pouvant pivoter les uns par rapport aux autres autour d'un axe de pivotement commun à deux flasques latéraux voisins, la chaîne de transmission d'énergie pouvant être déplacée de façon à former une boucle avec un brin supérieur, un brin inférieur et une zone de renvoi reliant ceux-ci, une face intérieure et une face extérieure étant définies sur les maillons de la chaîne par rapport à la boucle, le brin supérieur reposant sur le brin inférieur avec un contact au moins partiel entre les faces intérieures des maillons de la chaîne, des galets de roulement (21) étant prévus dans au moins quelques flasques latéraux (11, 12) et qui dépassent du petit côté (17) des flasques latéraux et qui peuvent rouler sur les petits côtés des flasques latéraux du brin opposé quand la chaîne se déplace sont prévues **caractérisée en ce que** les entretoises (31) sur la face extérieure des maillons ne sont pas fixées de manière permanente aux flasques latéraux mais sont mobiles et détachables de sorte qu'elles peuvent être détachées des flasques latéraux (11, 12) au moins à une extrémité et basculées pour ouvrir le maillon, tandis que les entretoises (31) sur la face intérieure des maillons sont reliées de façon fixe aux flasques latéraux, la liaison fixe des entretoises étant établie sur les surfaces (16) des flasques latéraux (11, 12) tournées vers l'intérieur du maillon, la liaison fixe étant une liaison par emboîtement qui ne peut être défaite qu'avec un outil par une ouverture (36) d'un évidement dans la face extérieure du flasque latérale.

2. Chaîne de transmission d'énergie selon la revendication 1, **caractérisée en ce que** les flasques latéraux (11, 12) sont conçus de façon à présenter à une extrémité une douille pivotante (13) pour recevoir le goujon pivotant (14) du flasque latéral voisin et à l'autre extrémité un goujon pivotant (14) destiné à s'insérer dans la douille pivotante des flasques latéraux voisins de cette extrémité.

3. Chaîne de transmission d'énergie selon la revendication 2, **caractérisée en ce que** les flasques latéraux (11, 12) sont coudés de telle manière que l'extrémité munie de la douille pivotante (13) soit orientée vers l'extérieur du maillon et l'extrémité munie du goujon pivotant (14) vers l'intérieur du maillon ou vice versa.

4. Chaîne de transmission d'énergie selon la revendication 1, **caractérisée en ce que** des flasques latéraux orientés alternativement vers l'intérieur et vers l'extérieur du maillon sont disposés dans les brins de flasques latéraux (11, 12).

5. Chaîne de transmission d'énergie selon la revendication 4, **caractérisée en ce que** seuls les flasques latéraux orientés vers l'extérieur sont munis de galets de roulement (21).

6. Chaîne de transmission d'énergie selon l'une des revendications précédentes, **caractérisée en ce que** l'angle de pivotement entre des flasques latéraux voisin est limité par des butées et des contre-appuis.
